# EUROPÄISCHE PATENTANMELDUNG

(11) **EP 1 340 441 A1**
(43) Veröffentlichungstag der Anmeldung: **03.09.2003**
(21) Anmeldenummer: 03004193.3
(22) Anmeldetag: 27.02.2003
(51) Int. Cl.: A47J 27/04, A47J 36/20

(54) **Behälter für das Zubereiten von Speisen mit unterschiedlichen Kochmerkmalen**

(30) Priorität: 01.03.2002 IT MI20020425
(71) Anmelder: BALLARINI PAOLO & FIGLI S.p.A., 46017 Rivarolo Mantovano (MN) (IT)
(72) Erfinder: Ferron, Francesco, 26041 Casalmaggiore (IT)
(74) Vertreter: Mayer, Hans Benno, Dipl.-Ing.

(57) **Zusammenfassung**

Behälter (1) zum differenzierten Kochen von Speisen, mit einem Siebeinsatz (5), der die zu kochenden Speisen aufnimmt, wobei das freie obere Ende (3) des Behälters (1) einen scheibenförmigen Körper (4) aufnimmt, der eine mittige Zone mit einer Öffnung aufweist, die von einem waagerecht angeordneten Umfangsrand (7) begrenzt ist, dadurch gekennzeichnet, dass sich vom Umfangsrand (7) des scheibenförmigen Körpers (4) ein sich ellbogenförmig erstreckendes Teilstück (8) aufrichtet, um eine Auflage für den oberen Rand (3) des Behälters (1) sowie die Umfangsfläche eines ersten Deckels (9) zu schaffen, wobei an die Auflage ein Teilstück anschließt, das eine angeordnete Kondensationsfläche bildet und diese Kondensationsfläche über eine ellbogenartig ausgebildete Verformung in einen Umfangsrand (10) übergeht, der die Auflage für einen zweiten Deckel (11) bildet.

## Beschreibung

Die vorstehende Erfindung betrifft einen Behälter zum differenzierten Kochen von Speisen.

Unter dem Ausdruck differenziertes Kochen von Speisen ist z.B. ein direkter Kochvorgang, von in den Behälter eingebrachten Speisen, z.B. in einer im Behälter vorgesehenen Wassermenge zu verstehen.

Ein weiterer Kochvorgang ist im Garen unter Dampfeinwirkung oder einem Garen auf einer geheizten Platte zu verstehen.

Bei Durchführung eines Kochvorganges, der unter Zuhilfenahme eines Korbes zur Aufnahme von Speisen erfolgt, der im Inneren des Behälters über einer Wassermenge angeordnet ist, wird durch Verschließen des Behälters mittels eines Deckels auf die Speisen, die im Inneren des Korbes angeordnet sind, über eine große Menge erhitzten Dampfes eingewirkt.

Um die Speisen unterschiedlichen Kochvorgängen aussetzen zu können, sind in der Vergangenheit unterschiedliche Behälter auf dem Markt bekannt geworden, die mit einer Vielzahl von Vorrichtungen und Zusatzteilen ausgerüstet sind, um so zu ermöglichen, dass der für den Kochvorgang verwendete Korb auf verschiedenen gewünschten Höhenlagen im Inneren des Behälters positionierbar ist.

Ein Nachteil der bekannten Behälter mit unterschiedlichen Haltevorrichtungen für die Positionierung des Korbes besteht darin, dass während des Kochvorganges ein unvermeidbares Austreten von Dampf oder kochender Flüssigkeit erfolgt, was zu empfindlichen Verletzungen an Personen oder zu einer Verschmutzung der Kochflächen durch austretende Flüssigkeit führen kann.

Aufgabe der vorstehenden Erfindung ist es, einen neuen Behälter vorzuschlagen, der für die Durchführung unterschiedlicher Kochvorgänge ausgebildet ist und mit einem Minimum an Zusatzgeräten auskommt, wobei ferner vermieden wird, dass während des Kochvorganges heißer Dampf oder Kochflüssigkeit in unkontrollierter Weise seitlich aus dem Behälter austreten.

Die erfindungsgemäße Aufgabe wird durch einen Behälter mit einem Korb zur Aufnahme von zu garenden Speisen dadurch gelöst, dass das freie obere Ende des Gefäßes ein scheibenförmig ausgebildetes Teil aufnimmt, das eine mittige Öffnung aufweist, die durch einen horizontal angeordneten Umfangsrand begrenzt wird und sich dadurch kennzeichnet, dass vom Umfangsrand des scheibenförmigen Teiles ein ellbogenartig geformtes Teil nach oben absteht und eine Auflage für den oberen Rand des Behälters sowie für das Umfangstück eines ersten Deckels begrenzt, dass an die Auflage ein Teilstück anschließt, welches eine Kondensationsfläche bildet und dass die Kondensationsfläche über ein ellbogenartig verformtes Teilstück in einen Umfangsrand übergeht, der die Auflage für eine zweiten Deckel bildet.

Weitere Vorteile der Erfindung können der nun folgenden Beschreibung, den Unteransprüchen sowie den beigefügten Zeichnungen entnommen werden.

Der erfindungsgemäße Gegenstand wird nun genauer beschrieben und anhand einiger Ausführungsbeispiele in den Zeichnungen dargestellt.

Es zeigen:
Figur 1 im Schnitt einen Behälter, der mit einem Auflagering zum Vermeiden eines Ausflusses ausgerüstet ist;
Figur 2 einen Behälter mit einem Korb, der auf dem Rand eines Ringes zum Vermeiden eines Ausflusses aufliegt und durch einen Deckel abgeschlossen ist;
Figur 3 einen Behälter mit einem Korb, der auf dem Boden des Behälters aufliegt sowie mit einem Ring zum Vermeiden eines Ausflusses in Verbindung mit einem Deckel, der kleineren Durchmesser aufweist;
Figur 4 einen Behälter mit einem Korb zur Aufnahme von Speisen, der auf dem Boden des Behälters aufliegt sowie mit einem Ring zur Vermeidung eines Überlaufes sowie mit einem Deckel, der größeren Durchmesser aufweist;
Figur 5 im Schnitt das obere Teilstück eines Behälters, der mit einem Ring zur Vermeidung eines Ausflusses ausgerüstet ist, wobei mit Strich-Punkt-Linien die Auflage für einen Bügel des Korbes, für einen Deckel mit kleinerem Durchmesser sowie für einen Deckel mit größerem Durchmesser dargestellt sind, und
Figur 6 den Auflagering in einer Draufsicht.

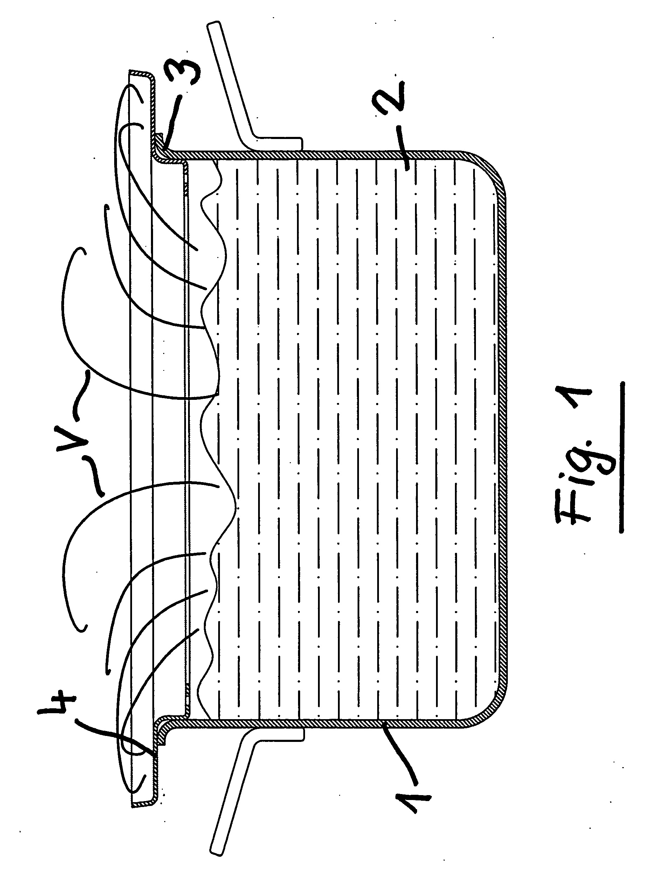

Der Figur 1 kann im Querschnitt ein verhältnismäßig großer Behälter 1 entnommen werden, der fast vollständig, z.B. mit einer Wassermenge 2, gefüllt ist. Das obere Ende 3 des Behälters 1 dient als Auflage für einen Ring 4, der im Anschluss noch genauer beschrieben werden wird.

Sobald das Wasser 2 oder eine andere Flüssigkeit zu kochen beginnt, sind die Dämpfe V oder Flüssigkeitsteile bestrebt, über den freien Rand 3 des Behälters 1 aus diesem auszutreten.

Durch Anordnen eines Ringes 4, der im Anschluss noch genauer beschrieben werden wird, wird das Austreten von Flüssigkeiten oder Dämpfen vermieden, da diese während des Abkühlvorganges an den Flächen des Ringes 4 kondensieren und erneut in das Innere des Behälters 1 zurückfließen.

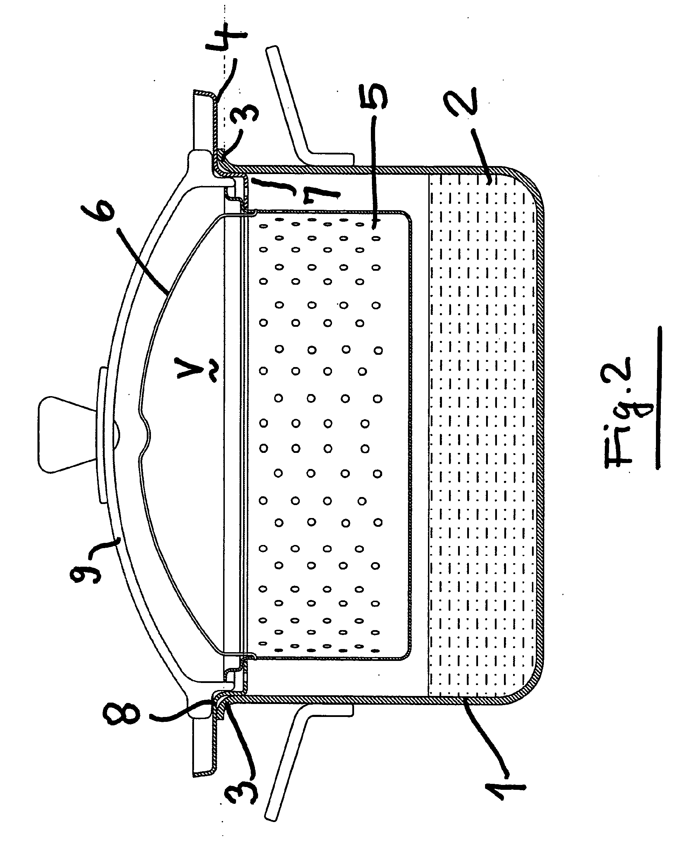

In Figur 2 ist der Behälter 1 dargestellt, der eine verminderte Wassermenge 2 aufnimmt. Über dem Wasserspiegel ist ein mit 5 gekennzeichneter Korb angeordnet. Der Handhabungsbügel 6 des Korbes 5 steht in Radialrichtung vom Korb 5 ab und kann daher an einem dafür vorgesehenen unteren Rand 7, des gesamthaft mit 4 gekennzeichneten Ringes zur Auflage gebracht werden.

Der Rand 7 erstreckt sich in einer horizontal verlaufenden Ebene bis zum Inneren des Behälters.

Der Auflagering 4 weist im Anschluss an den unteren Rand 7 einen ellbogenförmigen Übergang 8 auf. Der ellbogenförmig ausgebildete Übergang 8 bildet die Auflagefläche für einen Deckel 9, der kleineren Durchmesser aufweist.

Das freie Ende des Deckels 9, das sich in Umfangsrichtung erstreckt, weist im Querschnitt bogenförmigen Verlauf auf und das gewölbte Teilstück erlaubt eine abgedichtete Verbindung mit dem ellbogenartig ausgebildeten Übergang 8 des Ringes 4.

In dem in Figur 2 dargestellten Beispiel beginnt das Wasser 2 zu kochen und beeinflusst durch den so gebildeten, heißen Dampf die Speisen im Inneren des Korbes 5.

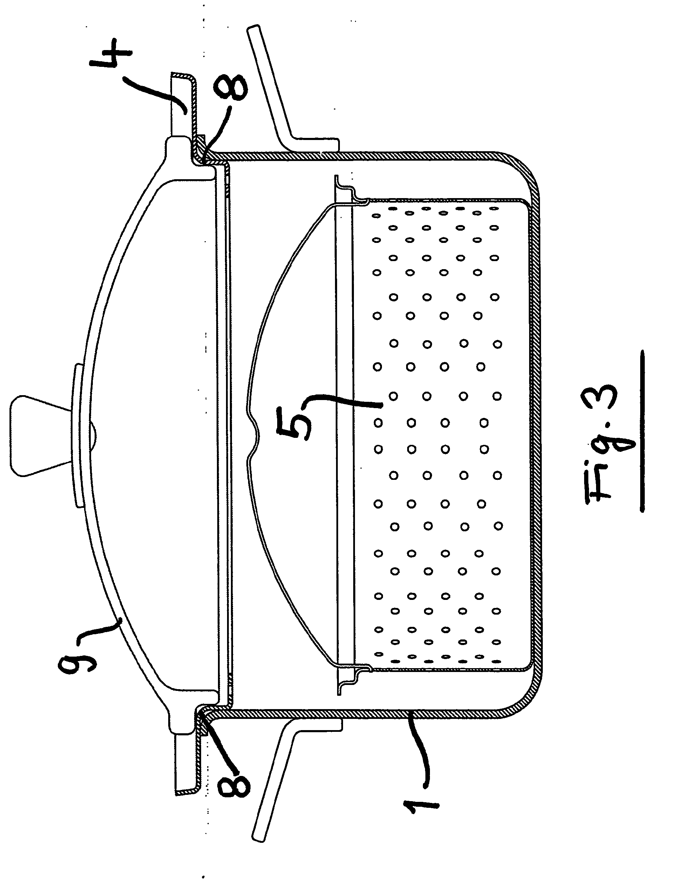

In Figur 3 ist ein Behälter 1 dargestellt, der auf seinem Boden den Korb 5 aufnimmt, wodurch ein Kochvorgang unter direktem Einfluss einer darunter liegenden Wärmequelle ermöglicht wird.

Stets im Übergang 8 des Ringes 4 liegt das sich im Umfangsrichtung erstreckende Ende eines Deckels 9 auf, wobei der Deckel 9 kleineren Durchmesser aufweist.

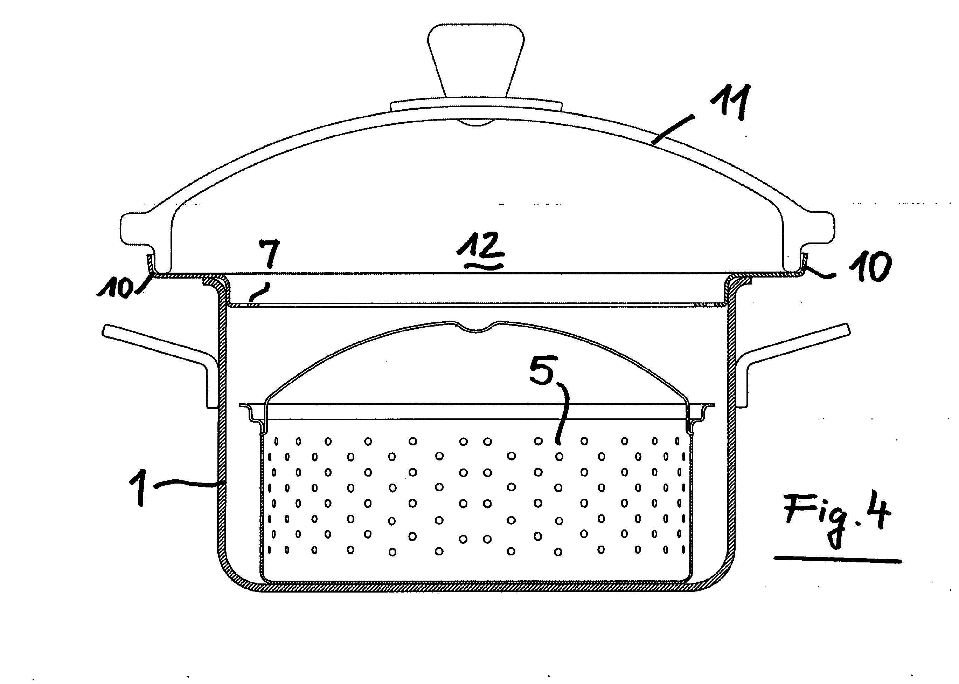

Figur 4 zeigt den Behälter 1 sowie den Korb 5 in identischer Lage zu der Darstellung gemäß Figur 3, lediglich mit dem Unterschied, dass der Ring in der weiter oben vorgesehenen Auflagefläche 10 einen Deckel 11 mit größerem Durchmesser aufnimmt.

Durch diese Maßnahme wird der Raum 12, der für die Bildung des Dampfes zur Verfügung steht, in seinem Volumen wesentlich vergrößert.

Selbstverständlich könnte der Korb 5 in seiner Höhenlage auch weiter oben auf dem Rand 7 des Ringes 4 angeordnet werden, um somit einen Garvorgang der Speisen unter Dampfeinwirkung zu ermöglichen.

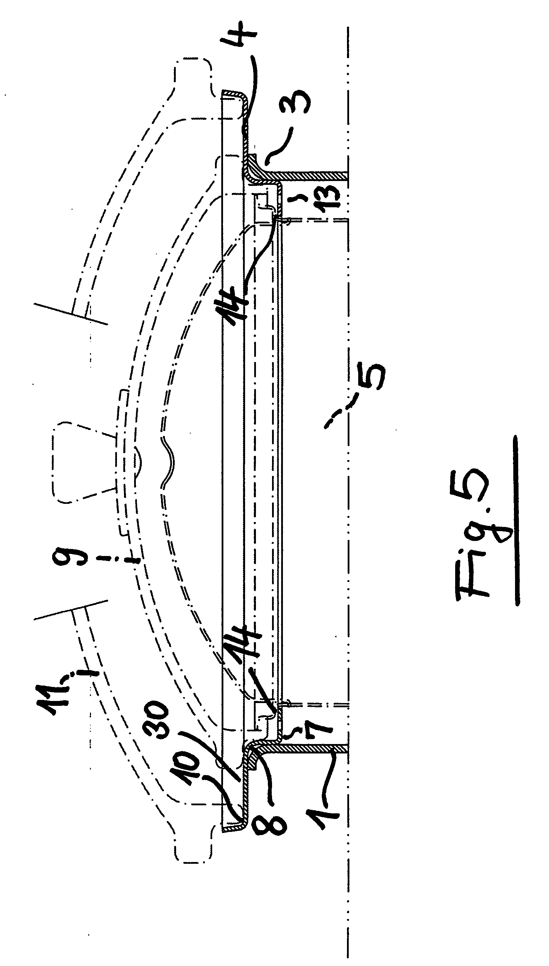

Der Figur 5 kann das obere Teilstück des Behälters entnommen werden, welches den Ring 4 in Übereinstimmung mit dessen Übergang 8 aufnimmt. Wie zu entnehmen ist, weist der Ring 4 an seiner Unterseite einen Umfangsrand 7 auf, der sich annähernd in horizontaler Richtung erstreckt.

Der Umfangsrand 7 kann mit Öffnungen 13 versehen werden, um einen schnelleren Abfluss der kondensierten und in den Behälter zurückfließenden Flüssigkeit zu erzielen.

Auf dem Rand 7 können in bequemer Weise die Enden 14 eines bogenförmigen Griffes des Korbes 5 aufliegen.

Im Anschluss an den Rand 7 (der sich in radialer Richtung zum Inneren des Behälters 1 erstreckt) ist ein eilbogenförmiger Übergang 8 vorgesehen, der die Auflage für einen ersten Deckel 9 bildet, der kleineren Durchmesser aufweist.

Auch in der Nähe des äußeren Endes 10 der Scheibe 4 wird eine zweite Auflage geschaffen, die geeignet ist, das entsprechend geformte Ende eines weiteren Deckels 11 mit größerem Durchmesser aufzunehmen.

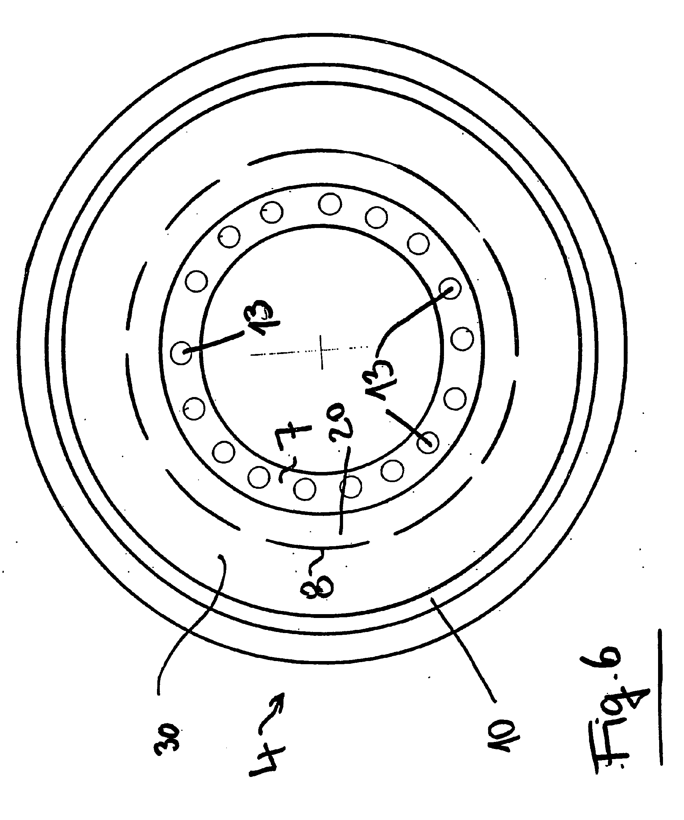

Der Figur 6, welche die Auflagescheibe 4 in der Draufsicht darstellt, ist zu entnehmen, dass der sich in Horizontalrichtung erstreckende Rand 7 über den gesamten Umfang der Scheibe 4 erstreckt.

Der Rand 7 nimmt eine Serie von Abflussöffnungen 13 auf und geht in einen geneigt angeordneten Rand 20 über, der in einem Übergang 8, der bogenförmig ausgebildet ist, endet. Dem Übergang 8 folgt eine geneigte Fläche 30, welche in eine zweite Fläche 10, die ellbogenartig verformt ist, übergeht und das Aufliegen eines weiteren Deckels 11 mit größerem Durchmesser ermöglicht.

## Patentansprüche

1. Behälter (1), zum differenzierten Kochen von Speisen, in Verbindung mit einem Korb (5), der die zu kochenden Speisen aufnimmt, wobei das freie obere Ende (3) des Behälters (1) einen scheibenförmigen Körper (4) aufnimmt, der eine mittige Öffnung aufweist, die von einem horizontalen ümfangsrand (7) begrenzt ist, **dadurch gekennzeichnet, dass** vom Umfangsrand (7) des scheibenförmigen Teiles (4) ein ellbogenartig geformtes Teil (8) nach oben absteht und eine Auflage für den oberen Rand (3) des Behälters sowie für das Umfangsstück eines ersten Deckels (9) begrenzt, dass an die Auflage (8) ein Teilstück (30) anschließt, welches eine Kondensationsfläche bildet, und dass sich die Kondensationsfläche (30) über ein ellbogenartig verformtes Teilstück (10) in einen Umfangsrand übergeht, der die Auflage für einen zweiten Deckel (11) bildet.

2. Behälter, zum differenzierten Kochen von Speisen, **dadurch gekennzeichnet, dass** der horizontale Umfangsrand (7) des scheibenförmigen Körpers (4) als Auflage für einen Korb (5) dient.

3. Behälter, zum differenzierten Kochen von Speisen, **dadurch gekennzeichnet, dass** im Anschluss an den horizontalen unteren Rand (7) ein ellbogenförmig ausgebildetes Teil (8) vorgesehen ist, das eine Auflage für einen ersten Deckel (9) mit kleinerem Durchmesser bildet.

4. Behälter, zum differenzierten Kochen von Speisen, nach Patentanspruch 1, **dadurch gekennzeichnet, dass** das freie sich in Umfangsrichtung erstreckende Ende des Deckels (9) im Querschnitt bogenförmigen Verlauf aufweist, wobei das gewölbte Teil eine abgedichtete Verbindung mit dem ellbogenförmig ausgebildeten Teil (8) des scheibenförmigen Körpers (4) ermöglicht.

5. Behälter, zum differenzierten Kochen von Speisen, nach Patentanspruch 1, **dadurch gekennzeichnet, dass** die ellbogenförmig ausgebildete Auflage (10) zur Aufnahme eines zweiten Deckels (10) mit größerem Durchmesser dient.

6. Behälter, zum differenzierten Kochen von Speisen, nach Patentanspruch 1, **dadurch gekennzeichnet, dass** der Rand (7) des scheibenförmigen Körpers (4) als Auflage für das Ende (14) des Deckels (9) und den Bügel (6) des Korbes (5) dient.

7. Behälter, zum differenzierten Kochen von Speisen, nach Patentanspruch 1, **dadurch gekennzeichnet, dass** der horizontale Rand (7) des scheibenförmigen Körpers (4) eine Anzahl von Ablauföffnungen (13) aufweist.
